# EUROPEAN PATENT APPLICATION

(11) **EP 4 369 571 A1**
(43) Date of publication of application: **15.05.2024**
(21) Application number: 22383083.7
(22) Date of filing: 10.11.2022
(51) Int. Cl.: H02K 3/24

(54) **IMPROVED INTERNAL COOLING SYSTEMS FOR E-MACHINES**

(71) Applicant: AIRBUS OPERATIONS, S.L.U., 28906 Getafe (Madrid) (ES)
(72) Inventor: URIONDO DEL POZO, Adrian, 28906 GETAFE (Madrid) (ES); CABAÑAS GUTIERREZ, Jose Manuel, 28906 GETAFE (Madrid) (ES); MARIOTTO, Damien, 28906 GETAFE (Madrid) (ES)
(74) Representative: Herrero & Asociados, S.L.

(57) **Abstract**

An internal cooling system (100) for an electric motor (1000) comprising a stator (1030) with stator laminations (1030a) and stator slots (1030b), a motor winding comprising head windings (1040) and stator slot winding turns (1050) in the stator slots (1030b), the internal cooling system (100) comprising an internal slot jacket (120) configured to encapsulate the stator slot winding turns (1050) in the stator slots (1030b), wherein the internal slot jacket (120) and/or the internal slot jacket (120) outside the plurality of ducts (120a) comprises a plurality of ducts (120a) configured to conduct coolant in contact with the stator slot winding turns (1050) in the stator slots (1030b) to extract winding losses, wherein each of the ducts (120a) comprises a plurality of features (120b) to reduce thermal resistance.

## Description

### Object of the invention

The present invention refers to an internal cooling system for an electric machine (e-machine) suitable for e.g. aeronautical propulsion applications that achieve increased performances.

Specifically, this invention focuses on internal cooling systems for alternating current (AC) electric motors such as permanent magnet synchronous machines where the losses are mainly located in conductors and stator laminations and the reduced losses are located in the rotor.

### Background of the invention

CN109861430A refers to an electric machine comprising a rotor, a stator, a plurality of bare conductors forming a plurality of windings in at least one of the stator and the rotor, and a fluid in direct physical contact with a plurality of outer surfaces of the plurality of bare conductors, wherein the fluid is electrically insulating and provides direct fluid cooling, to provide cooling for the plurality of bare conductors and electrical insulation between consecutive bare conductors of the plurality of bare conductors.

US2013147289A1 refers to a stator assembly including stator end turns can be at least partially disposed within the housing and can be at least partially circumferentially surrounded by the coolant jacket. Some embodiments provide at least one coolant apertures being in fluid communication with the coolant jacket. Some embodiments can include at least one end turn cavity at least partially surrounding a stator end turn and fluidly coupled to the coolant jacket via at least one coolant aperture. In some embodiments, the at least one end turn cavity is in fluid communication with the coolant jacket and the machine cavity.

JP6543390U relates to a motor small whose housing is divided into three parts, the front side part, central part, and the rear side part, a sheet-like resin separator is arranged on the inner surface of a stator core integrally formed with the central housing, and seal members are clamped between both extended ends of said separator and annular projections of said front and rear housings so that the stator coil part is tightly sealed and the stator coil is directly cooled with fluid.

US201562105798P relates to life large electric generator comprising a rotor arranged along a centerline of the generator, a core arranged coaxially and surrounding the rotor, a plurality of stator windings arranged within the core, a stator frame arranged to fixedly support the core and rotationally support the rotor, a gas cooling system that circulates a cooling gas within the generator, a liquid cooling system that circulates a cooling liquid to cool the stator windings. The heat generated within the coil due to operation is conducted to the stator core and the stator core is then cooled by a cooling medium. Means of cooling the coil is direct cooling, where cooling passages are formed within or adjacent to the coil itself. The cooling passages can be formed integrally with and as an electrical conductor or the cooling passages can be formed discretely from the electrical conductor as a separate component.

US89766710A relates to an electrical machine module that includes an electric machine and a stator assembly. The stator assembly includes a plurality of stator laminations interconnected and a plurality of conductors positioned through axial slots of the plurality of stator laminations. The electric machine module also includes a coolant channel defined at least partially within the axial slots and a housing. The housing at least partially surrounds the electrical machine and at least partially defines a machine cavity in fluid communication with the coolant channel. Slot liners can be positioned across the axial length of the stator assembly through each of the axial slots, and the plurality of conductors can be positioned through the slot liners.

DE102017204472A describes a stator with a first coolant chamber which is fluidically encapsulated in relation to its environment, and which surrounds at least one portion of the outer sections of the conductor segments located in this first axial end region, and wherein the first coolant chamber is fluidically connected to the channels of the grooves to feed and/or discharge coolant into and/or out of these channels. DE60221614T2 relates to a rotary electric machine, cooled by a liquid cooling medium, comprising: a rotor, a substantially cylindrical stator core with teeth and a rear core from which the teeth project, stator windings, wound on a circumference of the teeth of the stator core, a slot formed between two adjacent teeth and a first cooling medium channel extending along an axial direction of the stator core, wherein the first cooling medium channel is formed in the slot and between two adjacent stator windings by sealing the slot opening facing the rotor.

The improved performances presented in the above patents are limited due to the low thermal convection coefficient reached inside the slots by the conductors and between the coolant and the conductors. To increase an e-machine performance, i.e., power density and efficiency, there is a demand to improve the known cooling system with respect to the management of the winding losses and the thermal resistive path.

The present invention satisfies this demand.

### Description of the invention

To increase an e-machine performance, the cooling system of the e-machine has to be improved by reducing thermal resistances (e.g., by using high thermal conductivity materials) and increasing the thermal convection coefficient and the contact area between the coolant and the sources of heat (i.e., the winding/conductors). The present invention enhances these last two aspects compared with other state of the art solutions.

Hence, the purpose of this invention is to improve the heat dissipation with an improved internal cooling system which directly extracts the winding/conductor losses for electrical machines. The electrical machine could be used with harping windings technology but also with other windings technology like form wound windings, concentrated windings, etc.

The internal cooling system comprises an internal slot jacket configured to encapsulate the stator slot winding turns in the stator slots and which comprises ducts, and wherein at least one of the ducts contains optimized features as e.g., fins configured to increase the thermal contact area and the thermal convection coefficient between the coolant and the motor windings to evacuate the copper losses and reduce thermal resistance.

Furthermore, the internal slot jacket can contain additional optimized features outside the plurality of ducts. In one example, the internal slot jacket contains the optimized features only outside the ducts, e.g., the features can be established on a side of the internal slot jacket.

Additionally, the internal cooling system comprises an external head winding jacket enclosing the head winding to evacuate head winding losses.

Hence, in a first aspect, the present invention refers to an internal cooling system for an electric motor comprising a stator with stator laminations and stator slots, a motor winding comprising head windings and stator slot winding turns in the stator slots.

In a first example, the features comprise fins having a sinusoidal, round, triangular, squared or any polygon shape.

In the first example, the internal slot jacket comprises a first material being electrically non-conductive with high thermal conductivity and high dielectric strength. The first material can comprise alumina, BeO or AIN.

In a second example, the electric motor comprises a Drive End, DE, casing and a Non-Drive End, NDE casing, and the internal cooling system further comprises an external head winding jacket configured to contain the coolant and connectable to the DE casing and the NDE casing, wherein the external head winding cooling jacket is configured to encapsulate the head windings and be in contact with side surfaces of the head windings to extract head winding losses.

In the second example, the external head winding jacket comprises a second material being electrically non-conductive with high thermal conductivity and high dielectric strength, and the second material can comprise alumina, BeO or AIN.

A second aspect according to the present invention refers to an electric motor comprising the internal cooling system according to any of the preceding claims, wherein the internal cooling system comprises liquid as the coolant. The liquid can be a dielectric fluid such as mineral oil, silicon oil or di-ionized water to improve the thermal exchange performances. The motor winding can comprise e.g., harping windings technology, wound windings, or concentrated windings.

A third aspect according to the present invention refers to an electric motor according to the second aspect, being an AC motor such as a Permanent Magnet Synchronous Machine.

A fourth aspect according to the present invention refers to an air vehicle comprising an electric motor according to the third aspect.

Hence, the proposed cooling system in electric machines reduces thermal resistance (e.g., by using high thermal conductivity materials) and increases the thermal convection coefficient and the contact area between the coolant and the sources of heat.

### Brief description of the drawings

For a better understanding of the above explanation and for the sole purpose of providing an example, some non-limiting drawings are included that schematically depict a practical embodiment.
Figure 1 shows an example of an internal cooling system according to the present invention established in an electric motor, the internal cooling system comprising an external head winding jacket and an internal slot jacket.
Figure 2 shows the motor windings and an example of features of the ducts in a detailed view as part of the internal slot jacket of the internal cooling system according to the present invention.
Figure 3 shows the internal slot jacket capsulating the stator slot winding turns in the stator slots.
Figure 4A to 4C shows different examples of ducts and the internal features as part of the internal slot jacket of the internal cooling system according to the present invention.

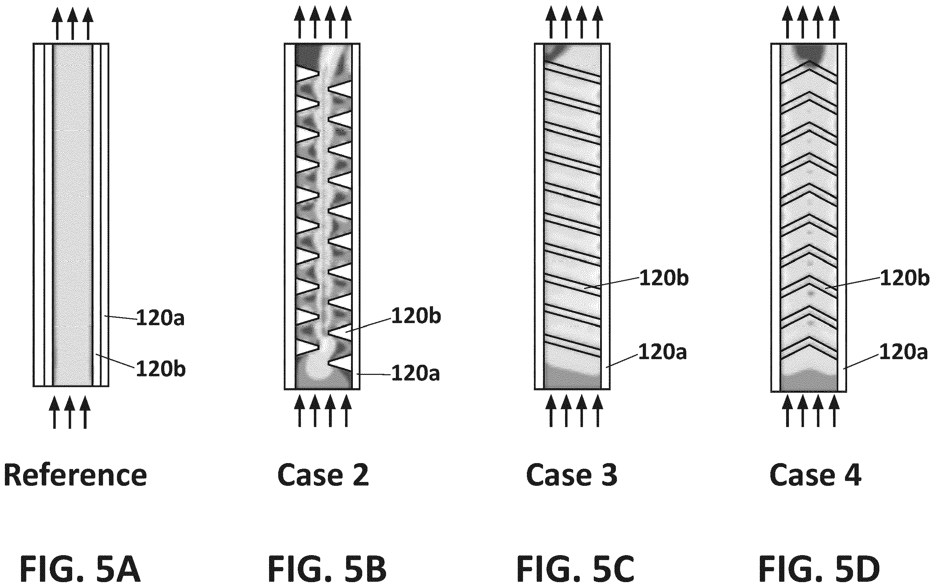

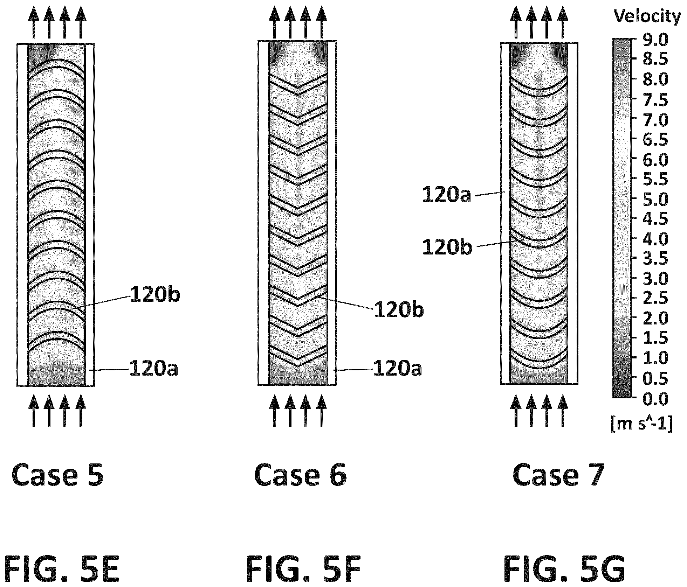

Figure 5A to 5G shows different examples of features in ducts and the thermal resistance behavior caused by said features.

### Description of the detailed embodiment

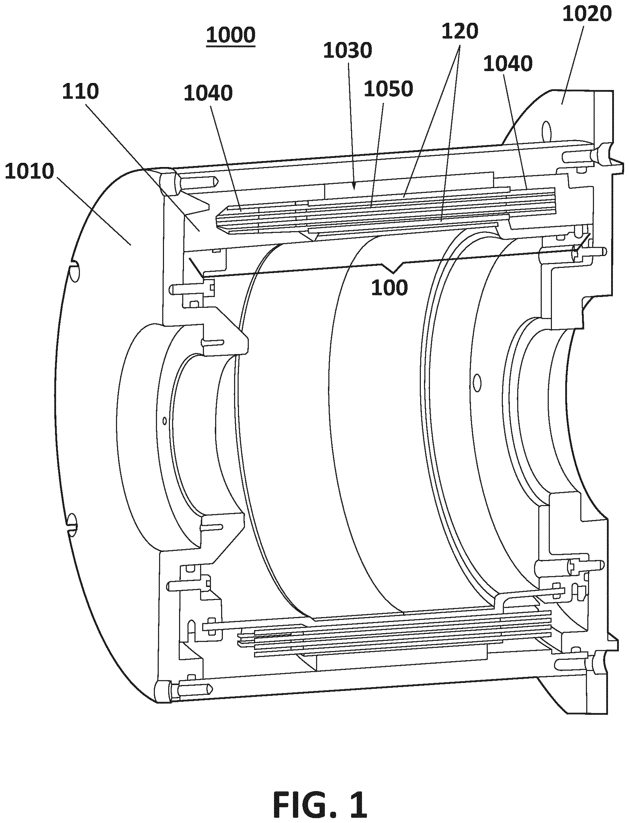

Figure 1 shows an example of an internal cooling system (100) according to the present invention established in an electric motor (1000). The internal cooling system (100) comprises an external head winding jacket (110) and an internal slot jacket (120).

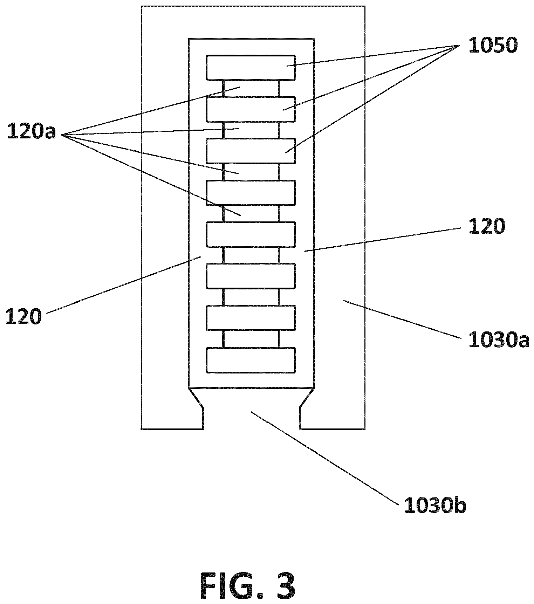

Figure 1 shows the electric motor (1000) comprising a DE casing (1010) and a NDE casing (1020), a stator (1030) with stator laminations (1030a) and stator slots (1030b) (a section of the stator laminations (1030a) and the stator slots (1030b) is shown in figure 3).

The electric motor (1000) further comprises a motor winding comprising head windings (1040) and stator slot winding turns (1050). The stator slot winding turns (1050) are located in the stator slots (1030b) as shown in a section view in figure 3.

In this example, the internal cooling system (100) comprises an external head winding jacket (110), as shown in figure 1, configured to contain coolant and connectable to the DE casing (1010) and the NDE casing (1020). The external head winding cooling jacket (110) is configured to encapsulate the head windings (1040) as shown in figure 1 and be in contact with side surfaces of the head windings (1040) to extract head winding losses.

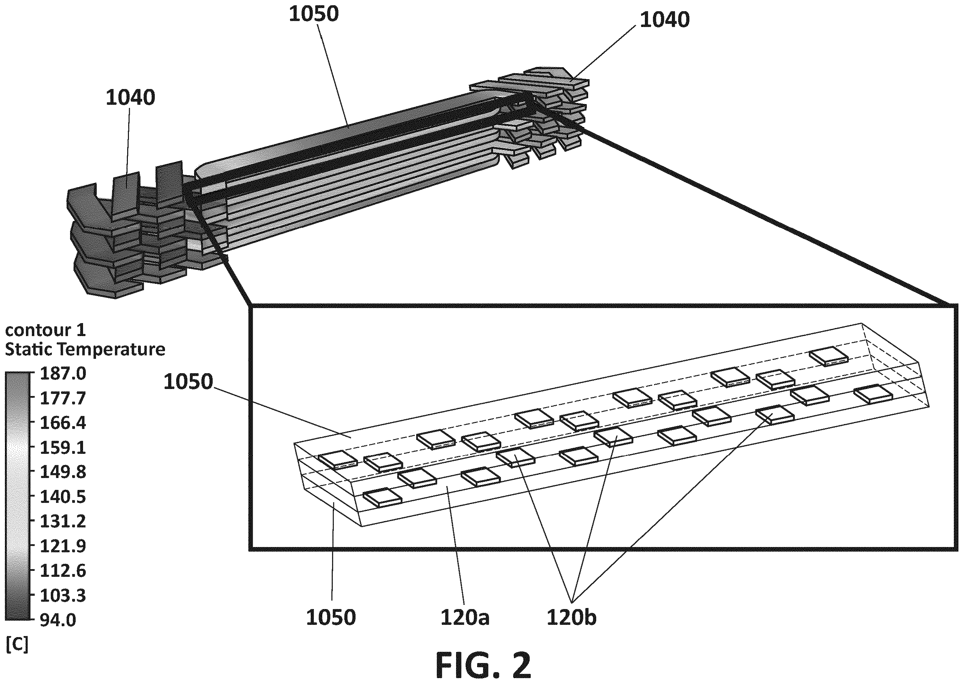

The internal cooling system (100) also comprises an internal slot jacket (120) configured to encapsulate the stator slot winding turns (1050) in the stator slots (1030b). The internal slot jacket (120) comprises a plurality of ducts (120a) configured to conduct the coolant in contact with the stator slot winding turns (1050) in the stator slots (1030b) to extract winding losses. The distribution of the plurality of ducts (120a) with respect to the slot winding turns (1050) are shown in figures 2 and 3.

Figure 2 shows the motor winding of the motor (1000), the motor winding comprises head windings (1040) and stator slot winding turns (1050). A detailed view of figure 2 shows the stator slot winding turns (1050) and the distribution of the plurality of ducts (120a) in the internal slot jacket (120). The plurality of ducts (120a) is configured to conduct the coolant in contact with the stator slot winding turns (1050). As shown in figure 2, each of the ducts (120a) of the internal slot jacket (120) comprises a plurality of features (120b) established in both radial sides of the ducts (120a) and configured to increase a thermal contact area between the coolant and the stator slot winding turns (1050) to reduce thermal resistance. The internal slot jacket (120) can also comprise features (120b), e.g. on a side of the internal slot jacket (120).

Figure 3 shows the encapsulation of the stator slot winding turns (1050) by the internal slot jacket (120). Figure 3 shows a section of a stator lamination (1030a) and a stator slot (1030b) and the distribution of the plurality of ducts (120a) of the internal slot jacket (120). In this example, the plurality of ducts (120a) is established between the stator slot winding turns (1050) which are encapsulated by the internal slot jacket (120) in the stator slots (1030b).

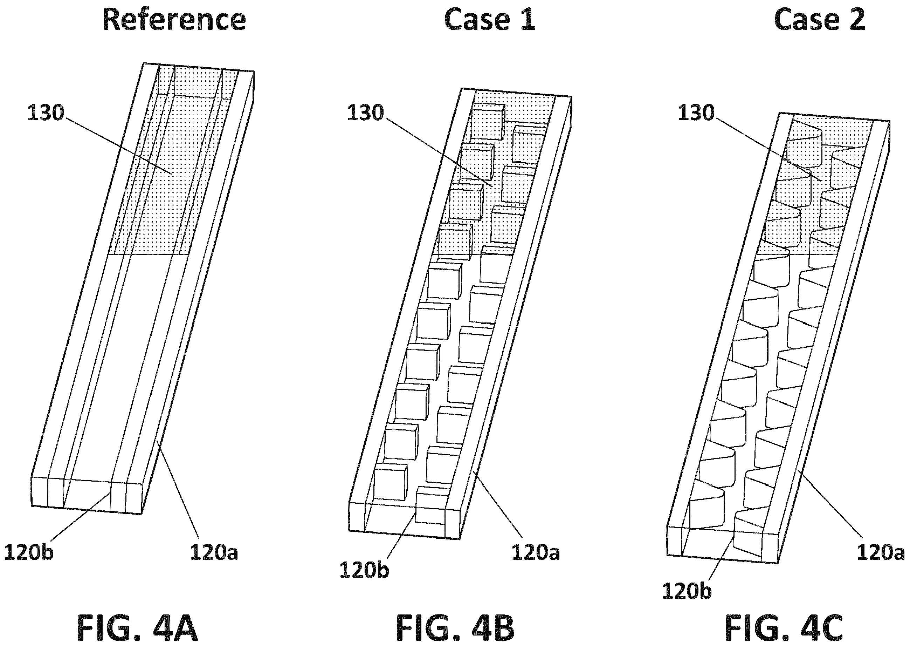

Figures 4A to 4C show different examples of features (120b) inside the ducts (120a) of the internal slot jacket (120). Said features (120b) increase a thermal contact area between the coolant and the stator slot winding turns (1050) to reduce thermal resistance. A specific features geometry can be based on the best compromise between pressure drop penalty and thermal convection improvement. For example:

Figure 4A "Reference" shows a first example of a duct (120a) wherein the features (120b) without interfering with the flow of the coolant (e.g., liquid (130)) without increasing the thermal contact area between the coolant and the stator slot winding turns (1050) and thus, without reducing the thermal resistance. The plurality of features (120b) has an elongated shape along the longitudinal axis of the duct (120a).

Figure 4B "Case 1" shows a second example of a duct (120a) wherein the features (120b) interfere the flow of the coolant (e.g., liquid (130)) increasing the thermal contact area between the coolant and the stator slot winding turns (1050) and thus, reducing the thermal resistance. The plurality of features (120b) is shaped as squared fins distributed along the longitudinal axis of the duct (120a).

Figure 4C "Case 2" shows a third example of a duct (120a) wherein the features (120b) interfere the flow of the coolant (e.g., liquid (130)) increasing the thermal contact area between the coolant and the stator slot winding turns (1050) and thus, reducing the thermal resistance. The plurality of features (120b) is shaped as sinusoidal fins distributed along the longitudinal axis of the duct (120a).

Hence, by having a plurality of features (120b) inside the ducts (120a), the internal slot jacket (120) is configured to increase a thermal contact area between the coolant and the stator slot winding turns (1050), and thus, the proposed internal cooling system (100) enables to increase the figure of merit of an e-machine, i.e., power density and efficiency by reducing thermal resistance and increasing the thermal convection coefficient.

## Claims

1. An internal cooling system (100) for an electric motor (1000) comprising a stator (1030) with stator laminations (1030a) and stator slots (1030b), a motor winding comprising head windings (1040) and stator slot winding turns (1050) in the stator slots (1030b), the internal cooling system (100) comprising:
- an internal slot jacket (120) configured to encapsulate the stator slot winding turns (1050) in the stator slots (1030b),
wherein the internal slot jacket (120) comprises a plurality of ducts (120a) configured to conduct coolant in contact with the stator slot winding turns (1050) in the stator slots (1030b) to extract winding losses,
wherein at least one of the ducts (120a) and/or the internal slot jacket (120) outside the plurality of ducts (120a) comprise a plurality of features (120b) configured to increase a thermal contact area between the coolant and the stator slot winding turns (1050) to reduce thermal resistance.

2. The internal cooling system (100) for an electric motor (1000) according to claim 1, wherein the internal slot jacket (120) comprise a first material being electrically non-conductive with high thermal conductivity and high dielectric strength.

3. The internal cooling system (100) for an electric motor (1000) according to claim 2, wherein the first material comprises alumina, BeO or AIN.

4. The internal cooling system (100) for an electric motor (1000) according to claims 1 to 3, wherein the electric motor (1000) comprises a Drive End, DE, casing (1010) and a Non-Drive End, NDE casing (1020), and the internal cooling system (100) further comprises:
- an external head winding jacket (110) configured to contain the coolant and connectable to the DE casing (1010) and the NDE casing (1020),
wherein the external head winding cooling jacket (110) is configured to encapsulate the head windings (1040) and be in contact with side surfaces of the head windings (1040) to extract head winding losses.

5. The internal cooling system (100) for an electric motor (1000) according to claim 4, wherein the external head winding jacket (110) comprises a second material being electrically non-conductive with high thermal conductivity and high dielectric strength.

6. The internal cooling system (100) for an electric motor (1000) according to claim 5, wherein the second material comprises alumina, BeO or AIN.

7. The internal cooling system (100) for an electric motor (1000) according to claim 1 to 6, wherein the plurality of features (120b) comprise fins having a sinusoidal, round, triangular, square or polygon shape.

8. An electric motor (1000) comprising the internal cooling system (100) according to any of the preceding claims, wherein the internal cooling system (100) comprises liquid (130) as the coolant.

9. The electric motor (1000) according to the previous claim, wherein the liquid (130) is a dielectric fluid such as mineral oil, silicon oil or di-ionized water.

10. An electric motor (1000) according to the previous claim, wherein the motor winding comprises harping windings technology, wound windings, or concentrated windings.

11. The electric motor (1000) according to claims 8 to 10, being an alternating current machine such as a Permanent Magnet Synchronous Machine.

12. Air vehicle comprising an electric motor according to any of the preceding claims.
